(19) Europäisches Patentamt
European Patent Office
Office européen des brevets

(11) EP 4 653 578 A1

(12) **EUROPEAN PATENT APPLICATION**
published in accordance with Art. 153(4) EPC

(43) Date of publication:
26.11.2025 Bulletin 2025/48

(21) Application number: 24763424.9

(22) Date of filing: 19.01.2024

(51) International Patent Classification (IPC):
C25B 1/042 $^{(2021.01)}$        C25B 9/00 $^{(2021.01)}$
C25B 15/029 $^{(2021.01)}$       C25B 15/08 $^{(2006.01)}$
C25B 9/13 $^{(2021.01)}$

(52) Cooperative Patent Classification (CPC):
C25B 1/042; C25B 9/00; C25B 15/029;
C25B 15/08; C25B 9/13; Y02E 60/36

(86) International application number:
PCT/JP2024/001383

(87) International publication number:
WO 2024/180939 (06.09.2024 Gazette 2024/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.03.2023 JP 2023031470

(71) Applicant: Mitsubishi Heavy Industries, Ltd.
Tokyo 100-8332 (JP)

(72) Inventors:
• MATAKE, Norihisa
Tokyo 100-8332 (JP)
• ARAKI, Kenta
Tokyo 100-8332 (JP)
• KATO, Masayuki
Tokyo 100-8332 (JP)

(74) Representative: Hoffmann Eitle
Patent- und Rechtsanwälte PartmbB
Arabellastraße 30
81925 München (DE)

(54) **HYDROGEN PRODUCTION SYSTEM AND METHOD FOR OPERATING HYDROGEN PRODUCTION SYSTEM**

(57) A hydrogen production system according to the present invention comprises: a solid oxide electrolysis cell (SOEC) that electrolyzes water vapor; a water vapor supply line for supplying water vapor to a hydrogen electrode of the SOEC; a water vapor discharge line through which water vapor discharged from the hydrogen electrode circulates; a first bypass line that communicates the water vapor supply line with the water vapor discharge line; and a first regulation device for regulating the flow rate of water vapor circulating through the first bypass line.

FIG. 1

**Description**

Technical Field

The present disclosure relates to a hydrogen production system and a method for operating the hydrogen production system.

The present application claims the benefit of priority based on Japanese Patent Application No. 2023-031470 filed to the Japanese Patent Office on March 2, 2023, the content of which is incorporated herein by reference.

Background Art

In a hydrogen production system that produces hydrogen by electrolyzing steam in a solid oxide electrolysis cell (SOEC), in order to prevent degradation of a hydrogen electrode of the SOEC, there is a case where hydrogen is supplied to the hydrogen electrode together with steam. The SOECs described in PTLs 1 and 2 have a configuration in which steam discharged from a hydrogen electrode is circulated into steam to be supplied to the hydrogen electrode. Since the steam discharged from the hydrogen electrode of the SOEC contains hydrogen generated by electrolysis of the steam, with the configuration of PTLs 1 and 2 described above, the steam supplied to the hydrogen electrode contains hydrogen, so that the degradation of the hydrogen electrode of the SOEC can be prevented. In addition, in the SOEC, it has been proposed to balance internal heat generation due to cell resistance during electrolysis and heat absorption due to hydrogen generation to maintain a constant operation temperature.

Citation List

Patent Literature

[PTL 1] Japanese Patent No. 6374965
[PTL 2] Japanese Patent No. 6573984
[PTL 3] Japanese Unexamined Patent Application Publication No. 2008-115430

Summary of Invention

Technical Problem

Meanwhile, PTLs 1 and 2 do not refer to the degradation of the hydrogen electrode, and PTL 3 mentions that it is necessary to suppress oxidation of an active metal in order to prevent the degradation of the hydrogen electrode of the SOEC. Meanwhile, PTL 3 does not disclose a control method for the amount of recirculation in which a part of the steam flowing out from the hydrogen electrode is recirculated to the hydrogen electrode in order to secure a required hydrogen concentration, or a method for appropriately maintaining a temperature of the SOEC when the steam is recirculated. Therefore, the hydrogen production system cannot necessarily be operated stably.

In view of the above circumstances, an object of at least one embodiment of the present disclosure is to provide a hydrogen production system and a method for operating a hydrogen production system capable of maintaining a hydrogen concentration in steam supplied to a hydrogen electrode of a solid oxide electrolysis cell (SOEC) under a condition appropriate for preventing degradation of the hydrogen electrode.

Solution to Problem

In order to achieve the above object, according to the present disclosure, there is provided a hydrogen production system including: a solid oxide electrolysis cell (SOEC) that electrolyzes steam; a steam supply line through which the steam is supplied to a hydrogen electrode of the SOEC; a steam discharge line through which the steam discharged from the hydrogen electrode circulates; a first bypass line that allows the steam supply line and the steam discharge line to communicate with each other; and a first regulation device for regulating a flow rate of the steam circulating through the first bypass line.

Advantageous Effects of Invention

With the hydrogen production system of the present disclosure, the first regulation device can maintain a hydrogen concentration in the steam supplied to the hydrogen electrode of the SOEC under a condition appropriate for preventing a degradation of the hydrogen electrode by regulating the flow rate of the steam circulating through the first bypass line.

Brief Description of Drawings

Fig. 1 is an exemplary configuration schematic-diagram of a hydrogen production system according to Embodiment 1 of the present disclosure.
Fig. 2 is an exemplary configuration schematic-diagram including some modification examples of the hydrogen production system according to Embodiment 1 of the present disclosure.
Fig. 3 is a flowchart of an operation of calculating a hydrogen concentration from an operating condition of the hydrogen production system according to Embodiment 1 of the present disclosure.
Fig. 4 is an exemplary configuration schematic-diagram of a hydrogen production system according to Embodiment 2 of the present disclosure.
Fig. 5 is an exemplary configuration schematic-diagram including some modification examples of the hydrogen production system according to Embodiment 2 of the present disclosure.
Fig. 6 is an exemplary configuration schematic-diagram of a hydrogen production system according to Embodiment 3 of the present disclosure.
Fig. 7 is a schematic graph exemplarily illustrating a relationship between a circulation rate R of steam and a module steam utilization rate $U_{sm}$ in the hydrogen production systems according to Embodiments 1 to 3 of the present disclosure. Description of Embodiments

Hereinafter, a hydrogen production system according to embodiments of the present disclosure will be described with reference to the drawings. The embodiments which will be described below represent aspects of the present disclosure and do not limit the disclosure, and any change can be made within the scope of the technical idea of the present disclosure.

(Embodiment 1)

<Configuration of Hydrogen Production System according to Embodiment 1 of Present Disclosure>

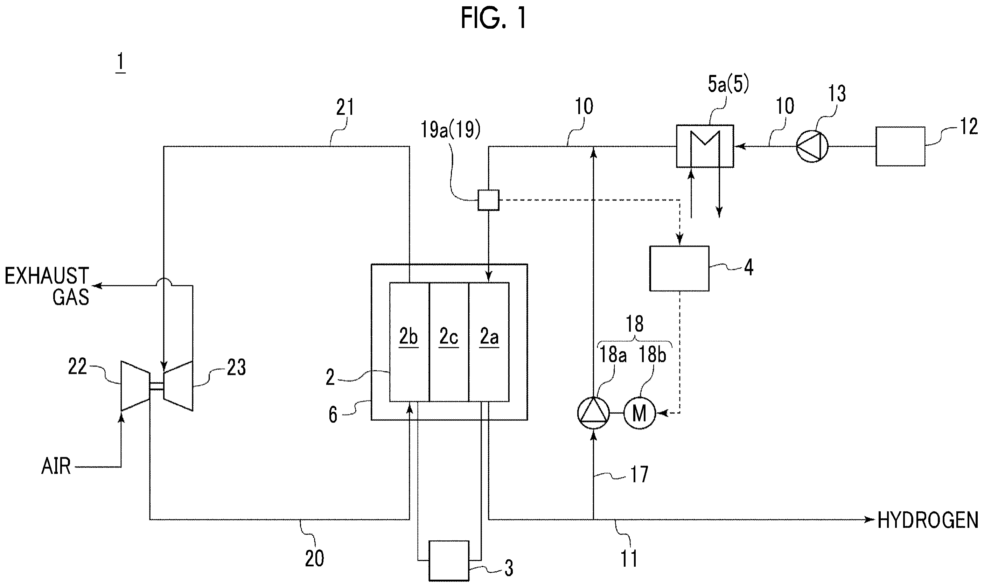

As illustrated in Fig. 1, a hydrogen production system 1 according to Embodiment 1 of the present disclosure includes a solid oxide electrolysis cell (SOEC) 2 that electrolyzes steam, and a power supply device 3 that applies a voltage to the SOEC 2. The SOEC 2 includes a hydrogen electrode 2a, an oxygen electrode 2b, and a solid electrolyte 2c provided between the hydrogen electrode 2a and the oxygen electrode 2b. Although only one SOEC 2 is illustrated in Fig. 1, a configuration in which a plurality of SOECs 2 are accommodated in a housing 6 may be adopted. The power supply device 3 is configured to apply a direct current voltage between the hydrogen electrode 2a and the oxygen electrode 2b.

A steam supply line 10 through which steam supplied to the hydrogen electrode 2a circulates and a steam discharge line 11 through which steam discharged from the hydrogen electrode 2a circulates are connected to the hydrogen electrode 2a. The steam discharged from the hydrogen electrode 2a contains hydrogen generated by the electrolysis of the steam as will be described below. Meanwhile, in the following description, unless there is a particular need to mention that the steam discharged from the hydrogen electrode 2a contains hydrogen, a gas discharged from the hydrogen electrode 2a will be simply referred to as "steam". The steam supply line 10 is connected to a water source 12, and the steam supply line 10 is provided with a pump 13 and a steam generator 5 that is located downstream of the pump 13 and generates steam to be supplied to the SOEC 2. The configuration of the steam generator 5 is not particularly limited, and may be, for example, a boiler 5a. In addition, a first bypass line 17 that allows the steam supply line 10 and the steam discharge line 11 between the boiler 5a and the hydrogen electrode 2a to communicate with each other is provided.

The first bypass line 17 is provided with a first regulation device 18 for regulating a flow rate of the steam circulating through the first bypass line 17. The configuration of the first regulation device 18 is not particularly limited, and for example, a configuration including a blower 18a and a motor 18b capable of regulating the discharge amount of the blower 18a can be adopted. In addition, although not an essential configuration, the steam supply line 10 may be provided with a hydrogen concentration acquisition device 19 that acquires a hydrogen concentration in the steam on a downstream side of a position at which the first bypass line 17 is connected to the steam supply line 10. The configuration of the hydrogen concentration acquisition device 19 is not particularly limited, and for example, a hydrogen concentration sensor 19a can be used. In addition, the hydrogen concentration acquisition device 19 may calculate or estimate the hydrogen concentration from a flow rate of the steam, an electrolytic current value, or the like, and this mode will be described below.

In the configuration in which the hydrogen concentration sensor 19a is provided, for example, an appropriate range (hereinafter, referred to as a "reference range") is set in advance for the hydrogen concentration in the steam based on a detection value by the hydrogen concentration sensor 19a, and the motor 18b is controlled such that the detection value by the hydrogen concentration sensor 19a falls within the reference range, so that the discharge amount of the blower 18a is regulated.

The hydrogen concentration sensor 19a and the motor 18b may be directly electrically connected to each other or may be connected to each other via wireless communication, or each of the hydrogen concentration sensor 19a and the motor 18b may be connected to a control device 4 such as, for example, a computer electrically or via wireless communication. The latter case has a configuration in which the reference range for the hydrogen concentration in the steam is stored in a memory or a hard disk of the control device 4 or in a cloud, and the control device controls the motor 18b to regulate the discharge amount of the blower 18a such that the detection value by the hydrogen concentration sensor 19a falls within the reference range.

A gas supply line 20 through which a gas containing oxygen to be supplied to the oxygen electrode 2b, for example, air circulates and a gas discharge line 21 through which exhaust gas discharged from the oxygen electrode 2b circulates are connected to the oxygen electrode 2b. A compressor 22 that compresses the air may be provided in the gas supply line 20, and a power turbine 23 driven by the exhaust gas discharged from the oxygen electrode 2b may be provided in the gas discharge line 21.

<Operation (Operating Method) of Hydrogen Production System according to Embodiment 1 of Present Disclosure>

Next, an operation (an operating method) of the hydrogen production system 1 according to Embodiment 1 of the present disclosure will be described. Water from the water source 12 circulates through the steam supply line 10 by the pump 13, is heated in the boiler 5a, and becomes steam. The steam generated in the boiler 5a circulates through the steam supply line 10, and flows into the hydrogen electrode 2a. On the other hand, air compressed by the compressor 22 circulates through the gas supply line 20, and flows into the oxygen electrode 2b.

The power supply device 3 applies a direct current voltage between the hydrogen electrode 2a and the oxygen electrode 2b, so that the steam in the hydrogen electrode 2a is electrolyzed to generate hydrogen and oxygen ions ($O^{2-}$) (see Reaction Equation (1) below). The oxygen ions pass through the solid electrolyte 2c, and become oxygen at the oxygen electrode 2b (see Reaction Equation (2) below). The steam flowing out from the hydrogen electrode 2a contains hydrogen, and the steam containing hydrogen circulates through the steam discharge line 11. Exhaust gas flowing out from the oxygen electrode 2b circulates through the gas discharge line 21, flows into the power turbine 23, and drives the power turbine 23.

$$H_2O + 2e^- \rightarrow H_2 + O^{2-} \, ... \qquad (1)$$

$$2O^{2-} \rightarrow O_2 + 4e^- \cdots \qquad (2)$$

When the blower 18a is driven, a part of the steam circulating through the steam discharge line 11 circulates through the first bypass line 17, and then merges with steam circulating through the steam supply line 10 and flows into the hydrogen electrode 2a. Since the steam circulating through the steam discharge line 11 contains hydrogen, a part of the steam flowing out from the hydrogen electrode 2a is circulated with this operation, so that not only the steam but also the hydrogen flows into the hydrogen electrode 2a. In this manner, it is possible to prevent a degradation of the hydrogen electrode 2a. Meanwhile, when the amount of circulation of the steam flowing out from the hydrogen electrode 2a to the hydrogen electrode 2a is small, a hydrogen concentration in the steam flowing into the hydrogen electrode 2a is decreased, and there is a concern that the effect of preventing the degradation of the hydrogen electrode 2a with hydrogen may not be appropriately obtained.

In contrast, when the hydrogen concentration sensor 19a is provided, the hydrogen concentration sensor 19a detects the hydrogen concentration in the steam flowing into the hydrogen electrode 2a, and the control device 4 controls the motor 18b, for example, based on a detection value to regulate the discharge amount of the blower 18a. For example, when the detection value by the hydrogen concentration sensor 19a is less than a lower limit value of a reference range set in advance, the motor 18b is controlled to increase the discharge amount of the blower 18a. On the contrary, when the detection value by the hydrogen concentration sensor 19a exceeds the upper limit value of the reference range, the motor 18b is controlled to reduce the discharge amount of the blower 18a. In this manner, the hydrogen concentration in the steam flowing into the hydrogen electrode 2a is maintained within the reference range, so that the effect of preventing the degradation of the hydrogen electrode 2a with hydrogen is appropriately obtained.

In this manner, by providing the hydrogen concentration sensor 19a, the first regulation device 18 can control the hydrogen concentration in the steam supplied to the hydrogen electrode 2a under a condition appropriate for preventing the degradation of the hydrogen electrode 2a by regulating a flow rate of the steam circulating through the first bypass line 17 based on the hydrogen concentration detected by the hydrogen concentration sensor 19a.

<Modification Example of Hydrogen Production System according to Embodiment 1 of Present Disclosure>

In Embodiment 1, the hydrogen concentration sensor 19a is provided in the steam supply line 10 on the downstream side of the position at which the first bypass line 17 is connected to the steam supply line 10. Meanwhile, the present disclosure is not limited to this mode. When the amount of steam supplied from the boiler 5a and the flow rate of the steam circulating through the first bypass line 17 are known, the hydrogen concentration in the steam flowing into the hydrogen electrode 2a can be calculated by using a hydrogen concentration in the steam flowing out from the hydrogen electrode 2a. Therefore, the hydrogen concentration sensor 19a may be provided in the steam discharge line 11 on an upstream side of a position at which the first bypass line 17 branches from the steam discharge line 11, or may be provided in the first bypass line 17.

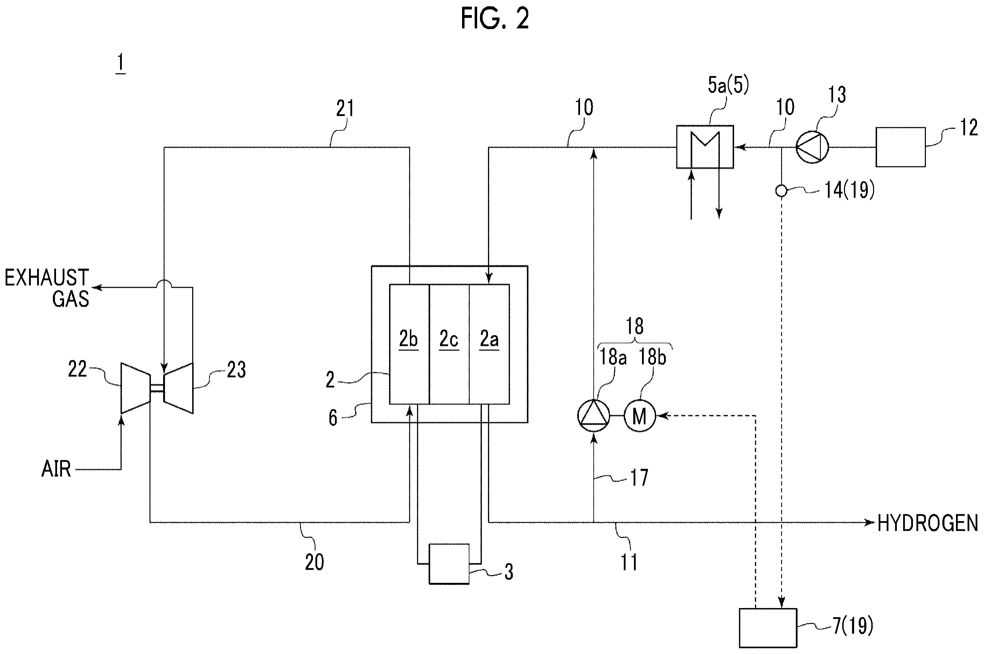

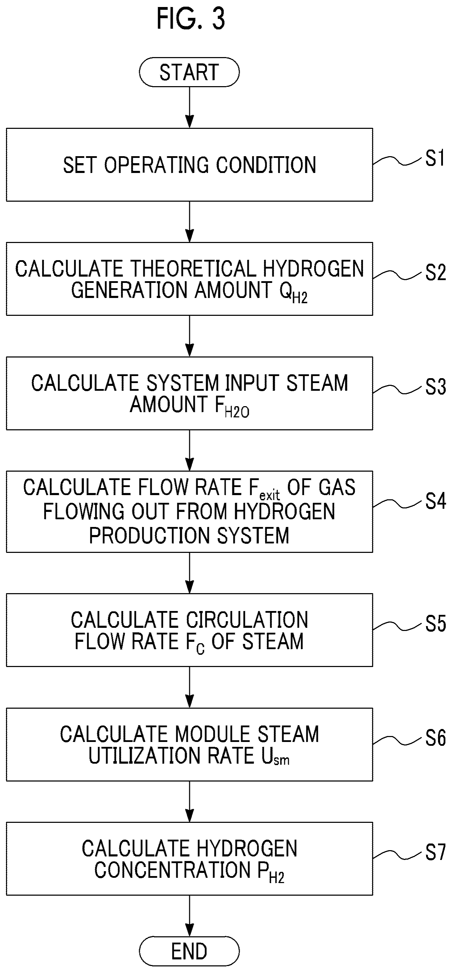

The hydrogen concentration acquisition device 19 is not limited to a device that directly measures the hydrogen concentration, such as the hydrogen concentration sensor 19a, and may be a device that calculates or estimates the hydrogen concentration from an operating condition of the hydrogen production system 1. An example of the hydrogen concentration acquisition device 19 in this manner will be described. As illustrated in Fig. 2, the hydrogen concentration acquisition device 19 in this example includes a control device 7 such as a computer, and is a device that calculates or estimates a hydrogen concentration from an operating condition of the hydrogen production system 1 by an operation to be described below. The control device 7 is connected to the motor 18b electrically or via wireless communication. An operation of calculating or estimating the hydrogen concentration in steam flowing into the hydrogen electrode 2a by the hydrogen concentration acquisition device 19 will be described with reference to a flowchart of Fig. 3.

In the control device 7, an operating condition of the hydrogen production system 1 is set (step S1). The operating condition set in step S1 is a system steam utilization rate $U_{SS}$ and a current value supplied from the power supply device 3. The system steam utilization rate $U_{SS}$ is a ratio of the steam amount (corresponding to the amount of water supplied from the water source 12) supplied to the hydrogen production system 1 to the amount of steam electrolyzed in the SOEC 2 (theoretical steam consumption amount), and the current value of the latter is an operating condition corresponding to the amount of steam electrolyzed in the SOEC 2.

From the operating condition set in step S1, the control device 7 calculates a theoretical hydrogen generation amount $Q_{H2}$ in the SOEC 2 (step S2). In subsequent step S3, the control device 7 calculates a system input steam amount $F_{H2O}$ by using Equation (3) to be described below. The system input steam amount $F_{H2O}$ is the amount of steam supplied to the hydrogen production system 1, and specifically, is the amount of steam supplied from the boiler 5a.

$$F_{H2O} = Q_{H2} / U_{SS} \cdots (3)$$

In step S4, the control device 7 calculates a flow rate $F_{exit}$ of gas (gas containing steam and hydrogen) flowing out from the hydrogen production system 1 via the steam discharge line 11. A part of the system input water steam is electrolyzed into hydrogen and oxygen, and the gas flowing out from the hydrogen electrode 2a is mixed gas of hydrogen and steam. In the electrolysis reaction, for example, 1 $Nm^3$/hr of hydrogen is generated by consuming 1 $Nm^3$/hr of steam. Therefore, a total volume flow rate circulating through the hydrogen electrode 2a is maintained constant regardless of a current efficiency $\eta$, which is a ratio of the actual hydrogen generation amount to the theoretical hydrogen generation amount. That is, the volume flow rate of the mixed gas flowing out from the hydrogen electrode 2a is equal to the volume flow rate of the steam supplied to the hydrogen electrode 2a. Therefore, the flow rate $F_{exit}$ is calculated as in Equation (4) to be described below.

$$F_{exit} = F_{H2O} \cdots (4)$$

In step S5, the control device 7 sets a circulation rate R of the steam represented by Equation (5) to be described below, and the control device 7 calculates a circulation flow rate (the flow rate of the steam circulating through the first bypass line 17) $F_C$ of the steam. The circulation rate R is a ratio of the flow rate $F_C$ of the mixed gas circulating through the first bypass line 17 to the flow rate of the mixed gas flowing out from the hydrogen electrode 2a.

$$R = F_C / (F_C + F_{exit}) \cdots (5)$$

In step S6, the control device 7 calculates a module steam utilization rate $U_{sm}$ from Equation (6) to be described below. The module steam utilization rate $U_{sm}$ is a ratio of the amount of electrolyzed steam (theoretical steam consumption amount) to the amount of steam flowing into the hydrogen electrode 2a, and when the current efficiency $\eta$ is taken into consideration, the module steam utilization rate $U_{sm}$ is as follows.

$$U_{sm} = (1 - R) \times U_{SS} / (1 - \eta \times U_{SS} \times R) \cdots (6)$$

In step S7, the control device 7 calculates a hydrogen concentration $P_{H2}$ from Equation (7) to be described below. The hydrogen concentration $P_{H2}$ is a mole fraction.

$$P_{H2} = U_{sm} \times R \times \eta / (1 - R + \eta \times U_{sm} \times R) \cdots (7)$$

In the above description, the control device 7 calculates the system input steam amount $F_{H2O}$, but instead of calculating $F_{H2O}$ in step S3, a flow rate detection device 14 (for example, a flow meter) that detects a flow rate of water or steam in the steam supply line 10 may be provided between the pump 13 and the boiler 5a or between a position at which the first bypass line 17 is connected to the steam supply line 10 and the boiler 5a (the former configuration is illustrated in Fig. 2), and a detection value by the flow rate detection device 14 may be used as the system input steam amount $F_{H2O}$. In this case, the hydrogen concentration acquisition device 19 is configured with the control device 7 such as a computer and the flow rate detection device 14 connected to the control device 7 electrically or via wireless communication. Based on the hydrogen concentration calculated in this manner, the control device 7 controls the motor 18b to regulate the discharge amount of the blower 18a.

(Embodiment 2)

Next, a hydrogen production system according to Embodiment 2 of the present disclosure will be described. The hydrogen production system according to Embodiment 2 is capable of regulating a temperature of circulating steam, as compared to Embodiment 1. Further, in Embodiment 2, the same components as those in Embodiment 1 are designated by the same reference signs, and the detailed descriptions thereof will not be repeated. In addition, the configuration of the modification example described in Embodiment 1 can be applied to Embodiment 2 as long as there is no contradiction in the configuration.

<Configuration of Hydrogen Production System according to Embodiment 2 of Present Disclosure>

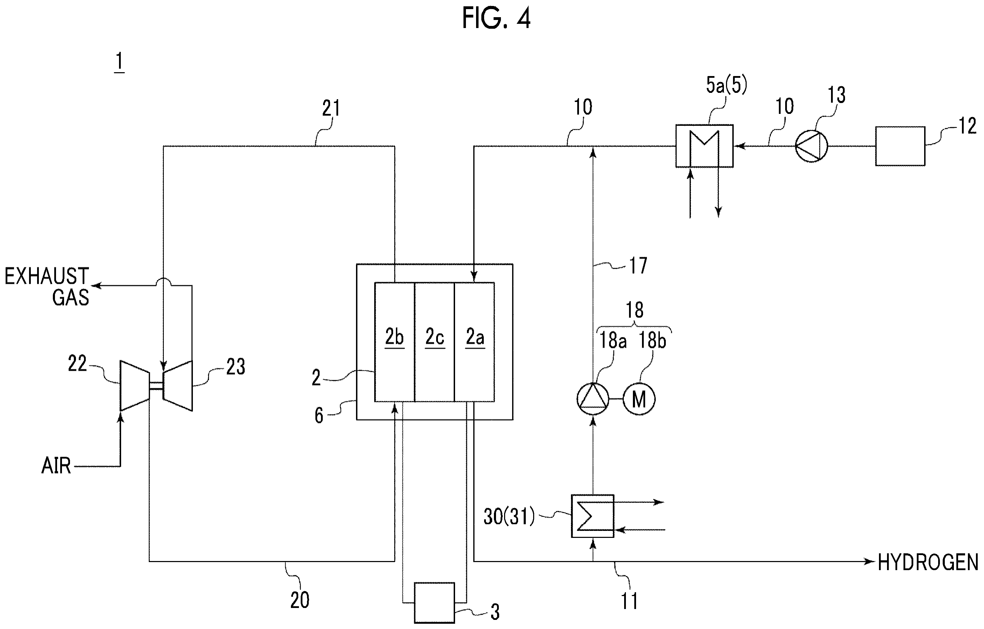

As illustrated in Fig. 4, the hydrogen production system 1 according to Embodiment 2 of the present disclosure is provided with a second regulation device 31 for regulating a temperature of steam circulating through the first bypass line 17. A configuration of the second regulation device 31 is not particularly limited, but the second regulation device 31 may be, for example, a cooler 30 for cooling the steam circulating through the first bypass line 17 by exchanging heat with any cooling medium. Other configurations are the same as the configurations in Embodiment 1, except that the hydrogen concentration acquisition device 19 is not provided.

<Operation (Operating Method) of Hydrogen Production System according to Embodiment 2 of Present Disclosure>

Next, an operation (an operating method) of the hydrogen production system 1 according to Embodiment 2 of the present disclosure will be described. When the blower 18a is driven, a part of steam circulating through the steam discharge line 11 circulates through the first bypass line 17, and the steam is cooled by exchanging heat with a cooling medium in the cooler 30. The steam cooled in the cooler 30 flows into the steam supply line 10, and merges with steam circulating through the steam supply line 10. Other operations are the same as the operations in Embodiment 1.

By such an operation, a temperature of the steam flowing into the hydrogen electrode 2a can be regulated to a desired value. That is, a hydrogen concentration in the steam flowing into the hydrogen electrode 2a and the temperature of the steam can be regulated by regulating the discharge amount of the blower 18a and the cooling amount by the cooler 30. Therefore, the hydrogen concentration in the steam supplied to the hydrogen electrode 2a can be maintained under a condition appropriate for preventing a degradation of the hydrogen electrode 2a, and an operating temperature of the SOEC 2 can be controlled to be equal to or less than an allowable temperature (for example, a heat-resistant temperature of the SOEC 2).

<Modification Example of Hydrogen Production System according to Embodiment 2 of Present Disclosure>

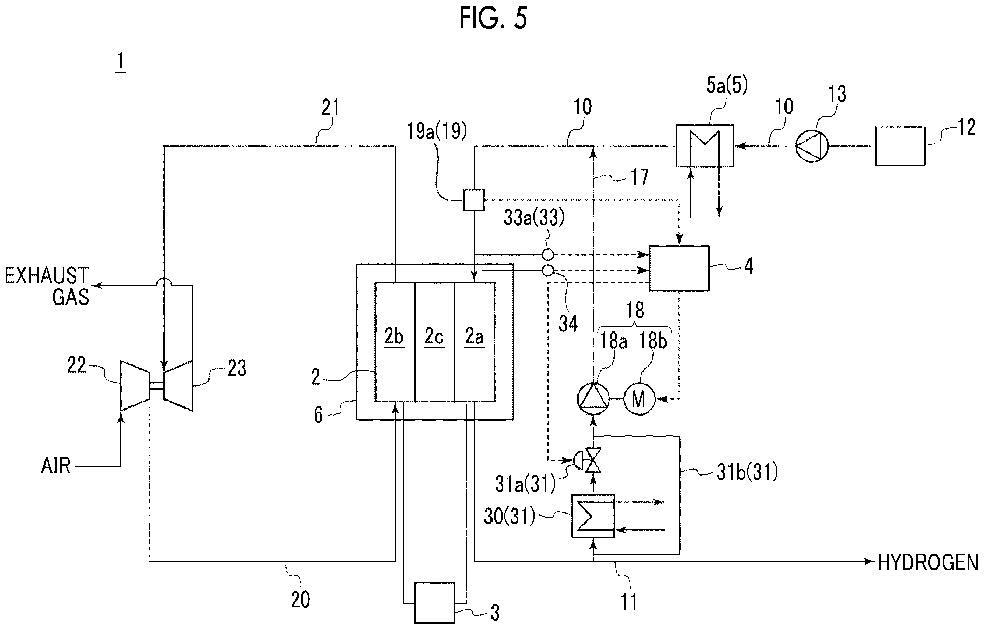

As illustrated in Fig. 5, the second regulation device 31 may further include, for example, a flow rate regulation valve 31a and a second bypass line 31b of which both ends communicate with the first bypass line 17 to bypass the cooler 30. In Fig. 5, the flow rate regulation valve 31a is provided in the first bypass line 17 on a downstream side of the cooler 30 between both ends of the second bypass line 31b. Meanwhile, the flow rate regulation valve 31a may be provided in the first bypass line 17 on an upstream side of the cooler 30 between both ends of the second bypass line 31b, may be provided in the second bypass line 31b, or may be provided anywhere as long as a flow rate of steam circulating through the second bypass line 31b can be regulated.

The steam supply line 10 may be provided with a steam temperature acquisition device 33 that acquires a temperature of steam circulating through the steam supply line 10, that is, steam flowing into the hydrogen electrode 2a, on a downstream side of a position at which the first bypass line 17 is connected to the steam supply line 10. The configuration of the steam temperature acquisition device 33 is not particularly limited, and for example, a temperature sensor 33a can be used. The temperature sensor 33a and the flow rate regulation valve 31a may be configured to be electrically connected or connected via wireless communication, and based on a detection value by the temperature sensor 33a, an appropriate range (hereinafter, referred to as a "reference range") may be set in advance for, for example, the temperature of the steam, and the opening degree of the flow rate regulation valve 31a may be controlled such that the detection value by the temperature sensor 33a falls within the reference range, so that a flow rate of steam circulating through the cooler 30 is regulated.

In addition, each of the temperature sensor 33a and the flow rate regulation valve 31a may be connected to the control device 4 such as, for example, a computer electrically or via wireless communication. In this case, the reference range for the temperature of the steam is stored in a memory or a hard disk of the control device 4 or in a cloud, and the control device controls the opening degree of the flow rate regulation valve 31a such that the detection value by the temperature sensor 33a falls within the reference range, thereby regulating the flow rate of the steam circulating through the cooler 30.

Further, in the same manner as in Embodiment 1, the hydrogen concentration acquisition device 19 may be provided. In addition, a temperature sensor 34 that is a module internal temperature acquisition device for detecting a temperature in the housing 6, that is, in the SOEC module may be provided. The temperature sensor 34 and the control device 4 may be electrically connected or connected via wireless communication such that the control device 4 can check a detection value by the temperature sensor 34.

Next, an operation (an operating method) of a modification example of the hydrogen production system 1 according to Embodiment 2 of the present disclosure will be described. In this modification example, the temperature sensor 33a detects a temperature of steam flowing into the hydrogen electrode 2a, and a flow rate of steam circulating through the cooler 30 is regulated by controlling the opening degree of the flow rate regulation valve 31a based on the detection value. For example, when the detection value by the temperature sensor 33a exceeds an upper limit value of a reference range, the opening degree of the flow rate regulation valve 31a is increased to reduce a flow rate circulating through the second bypass line 31b, thereby increasing the flow rate of the steam circulating through the cooler 30. In this manner, the temperature of the steam flowing into the hydrogen electrode 2a is decreased, and an operation temperature of the SOEC 2 can be suppressed to the allowable temperature or less. On the contrary, in a case where the detection value by the temperature sensor 33a is decreased, that is, in a case where the operation temperature of the SOEC 2 cannot be maintained, the opening degree of the flow rate regulation valve 31a is reduced, and the flow rate of the steam circulating through the cooler 30 is reduced by increasing the flow rate circulating through the second bypass line 31b. In this manner, the temperature of the steam flowing into the hydrogen electrode 2a can be maintained at a predetermined value.

In the SOEC 2, it is common to apply an operation voltage to the SOEC 2 such that a thermoneutral point is realized in which the amount of heat absorption required for the electrolysis of water and the amount of heat generated by internal resistance such as an ohmic loss of the SOEC 2 corresponding to the operation voltage of the SOEC 2 are balanced, and to maintain the temperature of the SOEC 2 constant. Therefore, when the electrolytic current having the operation voltage higher than the thermoneutral point is supplied to the SOEC 2, the amount of heat generation is increased and the temperature of the SOEC 2 is increased. In contrast, in this modification example, a part of the steam flowing out from the hydrogen electrode 2a flows into the hydrogen electrode 2a together with the steam supplied to the hydrogen electrode 2a after being cooled by the cooler 30. Therefore, even in a case where the electrolytic current having the operation voltage higher than the thermoneutral point is supplied to the SOEC 2, the temperature of the SOEC 2 can be prevented from being increased. In addition, in this modification example, the second regulation device 31 can regulate the temperature of the steam flowing into the hydrogen electrode 2a by regulating the flow rate of the steam circulating through the cooler 30 based on the detection value by the temperature sensor 33a. Therefore, the temperature of the SOEC 2 can be appropriately prevented from being increased or decreased regardless of the hydrogen generation amount.

In addition, the temperature of the SOEC 2 when the temperature of the steam flowing into the hydrogen electrode 2a is regulated can be detected by the temperature sensor 34, and the result can be checked by the control device 4. In this manner, in a case where the temperature of the steam flowing into the hydrogen electrode 2a is regulated to a predetermined temperature under the operating condition that is not the thermoneutral point, when the temperature of the SOEC 2 is not within the appropriate range, the temperature of the SOEC 2 can be maintained at the appropriate temperature by regulating the set value of the temperature of the steam flowing into the hydrogen electrode 2a.

(Embodiment 3)

Next, a hydrogen production system according to Embodiment 3 of the present disclosure will be described. The hydrogen production system according to Embodiment 3 is different from Embodiment 2 in that a current value supplied to the SOEC 2 can be regulated. Further, in Embodiment 3, the same components as those in Embodiment 2 are designated by the same reference signs, and the detailed descriptions thereof will not be repeated. In addition, the configuration of the modification example described in Embodiment 2 can be applied to Embodiment 3 as long as there is no contradiction in the configuration.

<Configuration of Hydrogen Production System according to Embodiment 3 of Present Disclosure>

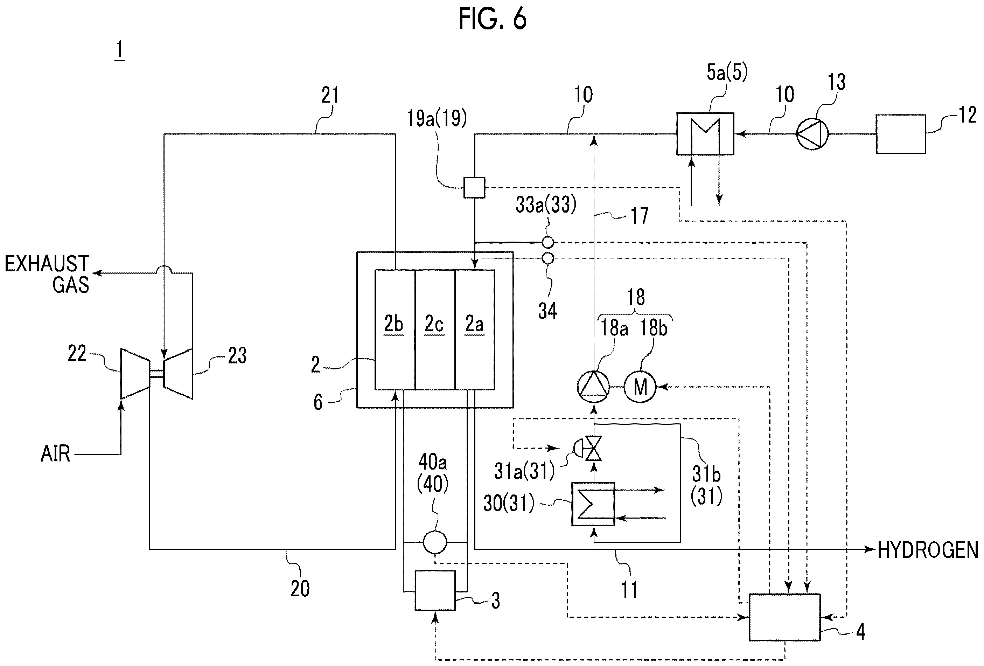

As illustrated in Fig. 6, the hydrogen production system 1 according to Embodiment 3 of the present disclosure is provided with the second regulation device 31, as in Embodiment 2. In addition, the hydrogen production system 1 is provided with an operation voltage acquisition device 40 that detects an operation voltage of the SOEC 2. The configuration of the operation voltage acquisition device 40 is not particularly limited, and, for example, a voltmeter 40a can be used. Embodiment 3 is configured such that, for example, an appropriate range (hereinafter, referred to as a "reference range") is set in advance for the operation voltage of the SOEC 2 based on a detection value by the voltmeter 40a, and the opening degree of the flow rate regulation valve 31a is controlled such that the detection value by the voltmeter 40a falls within the reference range, so that a flow rate of steam circulating through the cooler 30 is regulated. Other configurations are the same as those in Embodiment 2.

The voltmeter 40a and the flow rate regulation valve 31a may be directly electrically connected to each other or may be connected to each other via wireless communication, or each of the voltmeter 40a and the flow rate regulation valve 31a may be connected to the control device 4 such as, for example, a computer electrically or via wireless communication. In the same manner as in Embodiment 2, each of the hydrogen concentration sensor 19a, the motor 18b, and the temperature sensors 33a and 34 may be connected to the control device 4 electrically or via wireless communication. In a case where the control device 4 is provided, the reference range for the operation voltage of the SOEC 2 is stored in a memory or a hard disk of the control device 4, or a cloud, and the power supply device 3 is connected to the control device 4 electrically or via wireless communication such that the control device 4 can control a current value with which the power supply device 3 supplies power to the SOEC 2 such that the detection value by the voltmeter 40a falls within the reference range.

<Operation (Operating Method) of Hydrogen Production System according to Embodiment 3 of Present Disclosure>

Next, an operation (an operating method) of the hydrogen production system 1 according to Embodiment 3 of the present disclosure will be described. An operation for maintaining a hydrogen concentration in steam supplied to the hydrogen electrode 2a under a condition appropriate for preventing a degradation of the hydrogen electrode 2a has the same manner as the operation in Embodiment 1. In addition, an operation of controlling an operating temperature of the SOEC 2 to be equal to or less than an allowable temperature has the same manner as the operation in Embodiment 2. Meanwhile, even when controlling the operating temperature of the SOEC 2 to be equal to or less than the allowable temperature, for example, due to the degradation of the SOEC 2 over time, it is conceivable that the operating temperature of the SOEC 2 cannot be controlled to be equal to or less than the allowable temperature in the operation of Embodiment 2. In such a case, in Embodiment 3, the internal heat generation amount of the SOEC 2 is controlled to be reduced by decreasing the current value supplied from the power supply device 3 to the SOEC 2. In the operation of Embodiment 2, in a case where the operating temperature of the SOEC 2 cannot be controlled to be equal to or less than the allowable temperature, it is possible to cope with the situation by increasing the flow rate of the steam supplied to the hydrogen electrode 2a or the flow rate of the air supplied to the oxygen electrode 2b in addition to decreasing the current value supplied from the power supply device 3 to the SOEC 2. Meanwhile, in Embodiment 3, an operation for simply coping with the situation only by regulating the current value will be described.

In a case where the operating temperature of the SOEC 2 exceeds the allowable temperature even with the operation of Embodiment 2, that is, in a case where the control device 4 determines that a detection value by the temperature sensor 34 exceeds the allowable temperature, the control device 4 controls the power supply device 3 to decrease the current value to be supplied to the SOEC 2 such that the operation voltage of the SOEC 2 falls within a reference range and the operating temperature is equal to or less than the allowable temperature at the same time. The control device 4 makes the determination based on the detection values by the voltmeter 40a and the temperature sensor 34. The reference range of the operation voltage of the SOEC 2 is set, for example, based on the following concept. Although the lower the operation voltage, the better the electrolysis efficiency, when the operation voltage is less than a thermoneutral point, the amount of heat generated inside the SOEC 2 is too small. Therefore, in a case where the steam is to be generated by the amount of excess heat generated in the SOEC 2, it is conceivable that the amount of heat required for the generation of the steam cannot be secured. Therefore, the operation voltage (thermal neutral voltage, approximately 1.3 V) for realizing a thermoneutral point may be set to, for example, 1.4 to 1.6 V, which is approximately 0.1 to 0.3 V higher.

When the current value is decreased to control the temperature of the SOEC 2 to be equal to or less than the allowable temperature, there is a case where the operation voltage of the SOEC 2 deviates from the reference range. For example, the operation voltage of the SOEC 2 may exceed the reference range (for example, 1.4 to 1.6 V). As a result, there is a possibility that hydrogen conversion efficiency of the hydrogen production system 1 may be decreased, or the amount of excess heat may not be secured, and the amount of heat required for generating steam may be insufficient. Therefore, the operation voltage of the SOEC 2 is detected by the voltmeter 40a to thermally make the hydrogen production system 1 independent and to perform an operation of decreasing the current value while detecting that the operation voltage of the SOEC 2 is within the reference range. In this manner, it is possible to regulate the current value such that the temperature of the SOEC 2 is controlled to be equal to or less than the allowable temperature in a state in which the operation voltage of the SOEC 2 is within the reference range.

(Modification Example Common to Hydrogen Production Systems according to Embodiments 1 to 3 of Present Disclosure)

In Embodiments 1 to 3, a method for determining a reference range of a hydrogen concentration in steam flowing into the hydrogen electrode 2a is not specifically described. In addition, in Embodiments 1 to 3, the circulation rate R of the steam is determined by the first regulation device 18 regulating a flow rate of steam circulating through the first bypass line 17 based on a detection value by the hydrogen concentration sensor 19a. Meanwhile, the hydrogen concentration in the steam flowing into the hydrogen electrode 2a and the circulation rate R of the steam affect hydrogen conversion efficiency in the hydrogen production system 1, together with the system steam utilization rate $U_{SS}$ and the module steam utilization rate $U_{sm}$. Here, the hydrogen conversion efficiency means a ratio of the amount of heat of hydrogen generated by electrolysis of the steam to a total (total energy amount) of electric power and the amount of heat that are input to operate the hydrogen production system 1. Hereinafter, a method for determining an operating condition under which the hydrogen conversion efficiency can be improved will be described. Meanwhile, the method of determining the operating condition is not limited to the method described below, and is merely an exemplary method.

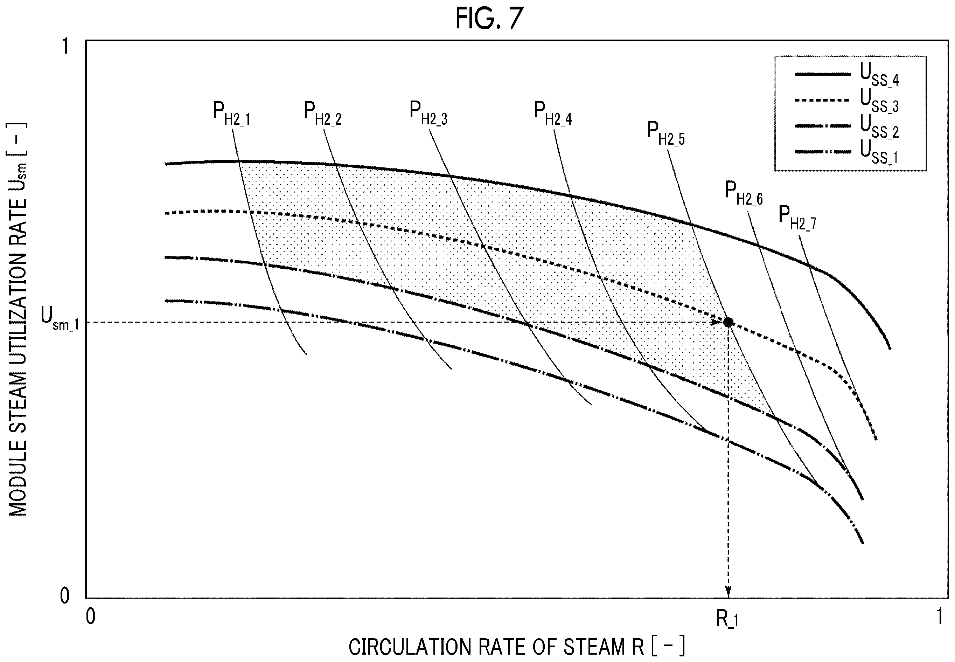

As illustrated in Fig. 7, when a horizontal axis represents the circulation rate R of steam and a vertical axis represents the module steam utilization rate $U_{sm}$, a relationship between R and $U_{sm}$ is illustrated for each system steam utilization rate Uss. In Fig. 7, a relationship corresponding to different four system steam utilization rates Uss ($U_{SS\_1}$ < $U_{SS\_2}$ < $U_{SS\_3}$ < $U_{SS\_4}$) is illustrated as an example. Further, the relationship between R and $U_{sm}$ is also illustrated for each hydrogen concentration in steam flowing into the hydrogen electrode 2a. In Fig. 7, a relationship corresponding to seven different hydrogen concentrations ($P_{m2\_1}$ < $P_{H2\_2}$ < $P_{H2\_3}$ < $P_{H2\_4}$ < $P_{H2\_5}$ < $P_{H2\_6}$ < $P_{H2\_7}$) is illustrated as an example.

When a reference range of the hydrogen concentration is determined as $P_{H2\_1}$ to $P_{H2\_5}$ and a reference range of the system steam utilization rate $U_{SS}$ is determined as $U_{SS\_2}$ to $U_{SS\_4}$, a region indicated by oblique lines in Fig. 7 can be determined as a range of the operating condition, and the first regulation device 18 can regulate the flow rate of the steam circulating through the first bypass line 17 to make the operating condition fall within such a region. For example, in a case where an operation is required at the module steam utilization rate of $U_{sm\_1}$, when the system steam utilization rate is to be operated at approximately $U_{SS\_3}$, the flow rate of the steam circulating through the first bypass line 17 is regulated such that the circulation rate of the steam is $R_{\_1}$. At this time, the hydrogen concentration in the steam flowing into the hydrogen electrode 2a is $P_{H2\_5}$. In a case where the hydrogen concentration is less than a lower limit value of the reference range, the hydrogen production system 1 is operated under a condition in which the system steam utilization rate is increased by increasing the circulation rate of the steam.

In order to improve the hydrogen conversion efficiency in the hydrogen production system 1, it is necessary to appropriately determine such a region. Next, a guideline for appropriately determining such a region will be described. Regarding the system steam utilization rate $U_{SS}$, as $U_{SS}$ is increased, a partial pressure of the steam flowing out from the hydrogen electrode 2a is decreased, and thus, the electrolysis in the SOEC 2 becomes difficult or the operation voltage of the SOEC 2 is increased. Therefore, an upper limit value is determined from this viewpoint. On the other hand, as $U_{SS}$ is decreased, the system input steam amount $F_{H2O}$ is increased. Therefore, it is necessary to secure the amount of heat required for the generation of the steam, and there is a disadvantage that it is necessary to increase a heat transfer surface of the boiler 5a. The lower limit value is determined from such a viewpoint. Regarding the hydrogen concentration in the steam flowing into the hydrogen electrode 2a, the hydrogen concentration is increased when the circulation rate of the steam is increased, but the upper limit value of the hydrogen concentration is determined from the upper limit of the allowable circulation rate. The lower limit value of the hydrogen concentration is determined as a minimum hydrogen concentration required to prevent the degradation of the hydrogen electrode 2a.

Based on the guideline described above, for example, in a case where an operation is required at a module steam utilization rate of 50%, a range such as a system steam utilization rate of 70% to 90% and a hydrogen concentration in steam of 10% to 50% can be determined.

The contents described in each embodiment described above are understood as follows, for example.

[1] According to one aspect, a hydrogen production system including:

a solid oxide electrolysis cell (SOEC) (2) that electrolyzes steam;
a steam supply line (10) through which the steam is supplied to a hydrogen electrode (2a) of the SOEC (2);
a steam discharge line (11) through which the steam discharged from the hydrogen electrode (2a) circulates;
a first bypass line (17) that allows the steam supply line (10) and the steam discharge line (11) to communicate with each other; and
a first regulation device (18) for regulating a flow rate of the steam circulating through the first bypass line (17).

With the hydrogen production system of the present disclosure, the first regulation device can maintain a hydrogen concentration in the steam supplied to the hydrogen electrode of the SOEC under a condition appropriate for preventing a degradation of the hydrogen electrode by regulating the flow rate of the steam circulating through the first bypass line.

[2] According to another aspect, the hydrogen production system according to [1], further including:
a hydrogen concentration acquisition device (19) that acquires a hydrogen concentration in the steam supplied to the hydrogen electrode (2a).

With such a configuration, based on the hydrogen concentration acquired by the hydrogen concentration acquisition device, the first regulation device regulates the flow rate of the steam circulating through the first bypass line. In this manner, the hydrogen concentration in the steam supplied to the hydrogen electrode of the SOEC can be maintained under a condition appropriate for preventing a degradation of the hydrogen electrode.

[3] According to still another aspect, the hydrogen production system according to [2],

in which the hydrogen concentration acquisition device (19) includes a control device (7), and
the control device (7) is configured to calculate the hydrogen concentration based on a set operating condition of the hydrogen production system (1).

With such a configuration, based on the hydrogen concentration acquired by the hydrogen concentration acquisition device, the first regulation device regulates the flow rate of the steam circulating through the first bypass line. In this manner, the hydrogen concentration in the steam supplied to the hydrogen electrode of the SOEC can be maintained under a condition appropriate for preventing a degradation of the hydrogen electrode.

[4] According to still another aspect, the hydrogen production system according to [3],

in which the hydrogen concentration acquisition device (19) further includes a flow rate detection device (14) that detects a steam amount supplied to the hydrogen production system (1), and
the control device (7) is configured to calculate the hydrogen concentration based on the set operating condition of the hydrogen production system (1) and a detection value by the flow rate detection device (14).

With such a configuration, based on the hydrogen concentration acquired by the hydrogen concentration acquisition device, the first regulation device regulates the flow rate of the steam circulating through the first bypass line. In this manner, the hydrogen concentration in the steam supplied to the hydrogen electrode of the SOEC can be maintained under a condition appropriate for preventing a degradation of the hydrogen electrode.

[5] According to still another aspect, the hydrogen production system according to [1], further including:
a second regulation device (31) for regulating a temperature of the steam circulating through the first bypass line (17).

With such a configuration, the hydrogen concentration in the steam flowing into the hydrogen electrode and the temperature of the steam can be regulated by the first regulation device and the second regulation device. Therefore, the hydrogen concentration in the steam supplied to the hydrogen electrode can be maintained under a condition appropriate for preventing the degradation of the hydrogen electrode, and an operating temperature of the SOEC can be controlled to be equal to or less than an allowable temperature.

[6] According to still another aspect, the hydrogen production system according to [5],
in which the second regulation device (31) includes a cooler (30) for cooling the steam circulating through the first bypass line (17).

It is common to apply an operation voltage to the SOEC such that a thermoneutral point is realized in which the amount of heat absorption required for the electrolysis of water and the amount of heat generated by internal resistance such as an ohmic loss of the SOEC corresponding to the operation voltage of the SOEC are balanced, and to maintain the temperature of the SOEC constant. When an electrolytic current having the operation voltage higher than the thermoneutral point is supplied to the SOEC, the amount of heat generation is increased and the temperature of the SOEC is increased. In contrast, according to the configuration of [6], a part of the steam flowing out from the hydrogen electrode is cooled by the cooler and then flows into the hydrogen electrode together with the steam supplied to the hydrogen electrode. Therefore, even in a case where the electrolytic current having the operation voltage higher than the thermoneutral point is supplied to the SOEC, the increase in the temperature of the SOEC can be prevented. Therefore, the operating temperature of the SOEC can be appropriately controlled to be equal to or less than the allowable temperature.

[7] According to still another aspect, the hydrogen production system according to [6], in which the second regulation device (31) includes

> a second bypass line (31b) having both ends communicating with the first bypass line (17) to bypass the cooler (30), and
> a flow rate regulation valve (31a) for regulating a flow rate of the steam circulating through the second bypass line (31b).

With such a configuration, the second regulation device can control the temperature of the steam flowing into the hydrogen electrode by regulating the flow rate of the steam circulating through the cooler. Therefore, the operating temperature of the SOEC can be appropriately controlled to be equal to or less than the allowable temperature.

[8] According to still another aspect, the hydrogen production system according to any one of [5] to [7], further including:
a steam temperature acquisition device (33) or a module internal temperature acquisition device (temperature sensor 34) that acquires a temperature of the SOEC (2).

With such a configuration, the second regulation device can control the temperature of the steam flowing into the hydrogen electrode by regulating the flow rate of the steam circulating through the cooler, based on the temperature acquired by the steam temperature acquisition device or the module internal temperature acquisition device. Therefore, the operating temperature of the SOEC can be appropriately controlled to be equal to or less than the allowable temperature.

[9] According to one aspect, a method for operating the hydrogen production system (1) according to any one of [2] to [4], the method including:

> a step of acquiring the hydrogen concentration by using the hydrogen concentration acquisition device (19); and
> a step of regulating the flow rate of the steam circulating through the first bypass line (17) by using the first regulation device (18) based on the hydrogen concentration acquired by the hydrogen concentration acquisition device (19).

According to this operating method, the first regulation device regulates the flow rate of the steam circulating through the first bypass line, based on the hydrogen concentration acquired by the hydrogen concentration acquisition device. In this manner, the hydrogen concentration in the steam supplied to the hydrogen electrode of the SOEC can be maintained under a condition appropriate for preventing the degradation of the hydrogen electrode.

[10] According to one aspect, a method for operating the hydrogen production system (1) according to [8], the method including:

> a step of acquiring the temperature by using the steam temperature acquisition device (33) or the module internal temperature acquisition device (34); and
> a step of regulating the temperature of the steam circulating through the first bypass line (17) by using the second regulation device (31) based on the temperature acquired by the steam temperature acquisition device (33) or the module internal temperature acquisition device (34).

It is common to apply an operation voltage to the SOEC such that a thermoneutral point is realized in which the amount of heat absorption required for the electrolysis of water and the amount of heat generated by internal resistance such as an ohmic loss of the SOEC corresponding to the operation voltage of the SOEC are balanced, and to maintain the temperature of the SOEC constant. When the electrolytic current having the operation voltage higher than the thermoneutral point is supplied to the SOEC, the amount of heat generation is increased and the temperature of the SOEC is increased. In contrast, according to the operating method of [9], a part of the steam flowing out from the hydrogen electrode is cooled by the cooler and then flows into the hydrogen electrode together with the steam supplied to the hydrogen electrode. Therefore, even in a case where the electrolytic current having the operation voltage higher than the thermoneutral point is supplied to the SOEC, the increase in the temperature of the SOEC can be prevented. Therefore, the operating temperature of the SOEC can be appropriately controlled to be equal to or less than the allowable temperature. In addition, with the operating method of [9], the second regulation device can regulate the temperature of the steam circulating through the first bypass line, based on the temperature acquired by the steam temperature acquisition device or the module internal temperature acquisition device. Therefore, the operating temperature of the SOEC can be appropriately controlled to be equal to or less than the allowable temperature.

[11] According to another aspect, the method for operating the hydrogen production system further including: a step of decreasing a current value supplied to the SOEC (2) after the step of regulating the temperature of the steam circulating through the first bypass line (17).

With this operating method, even when controlling the operating temperature of the SOEC to be equal to or less than the allowable temperature by the operating method of [9], for example, in a case where the operating temperature of the SOEC cannot be controlled to be equal to or less than the allowable temperature due to the degradation of the SOEC over time, the operating temperature of the SOEC can be controlled to be equal to or less than the allowable temperature by decreasing the current value supplied from the power supply device to the SOEC.

[12] According to another aspect, the method for operating the hydrogen production system (1) according to [9], the method further including:

a step of determining a reference range of the hydrogen concentration; and
a step of determining a reference range of a system steam utilization rate, which is a ratio of a flow rate of the steam electrolyzed in the SOEC (2) to a flow rate of the steam supplied to the hydrogen production system (1),
in which the first regulation device (18) regulates the flow rate of the steam circulating through the first bypass line (17) such that the system steam utilization rate and the hydrogen concentration acquired by the hydrogen concentration acquisition device are respectively within the reference ranges.

With this operating method, it is possible to improve conversion efficiency from steam to hydrogen and to prevent the degradation of the hydrogen electrode.

Reference Signs List

1 Hydrogen production system
2 Solid oxide electrolysis cell (SOEC)
2a Hydrogen electrode
7 Control device
10 Steam supply line
11 Steam discharge line
17 First bypass line
18 First regulation device
19 Hydrogen concentration acquisition device
30 Cooler
31 Second regulation device
31a Flow rate regulation valve
31b Second bypass line
33 Steam temperature acquisition device
34 Temperature sensor (module internal temperature acquisition device)

## Claims

1. A hydrogen production system comprising:

   a solid oxide electrolysis cell (SOEC) that electrolyzes steam;
   a steam supply line through which the steam is supplied to a hydrogen electrode of the SOEC;
   a steam discharge line through which the steam discharged from the hydrogen electrode circulates;
   a first bypass line that allows the steam supply line and the steam discharge line to communicate with each other; and
   a first regulation device for regulating a flow rate of the steam circulating through the first bypass line.

2. The hydrogen production system according to Claim 1, further comprising:

a hydrogen concentration acquisition device that acquires a hydrogen concentration in the steam supplied to the hydrogen electrode.

3. The hydrogen production system according to Claim 2,

wherein the hydrogen concentration acquisition device includes a control device, and
the control device is configured to calculate the hydrogen concentration based on a set operating condition of the hydrogen production system.

4. The hydrogen production system according to Claim 3,

wherein the hydrogen concentration acquisition device further includes a flow rate detection device that detects a steam amount supplied to the hydrogen production system, and
the control device is configured to calculate the hydrogen concentration based on the set operating condition of the hydrogen production system and a detection value by the flow rate detection device.

5. The hydrogen production system according to Claim 1, further comprising:
a second regulation device for regulating a temperature of the steam circulating through the first bypass line.

6. The hydrogen production system according to Claim 5,
wherein the second regulation device includes a cooler for cooling the steam circulating through the first bypass line.

7. The hydrogen production system according to Claim 6,
wherein the second regulation device includes

a second bypass line having both ends communicating with the first bypass line to bypass the cooler, and
a flow rate regulation valve for regulating a flow rate of the steam circulating through the second bypass line.

8. The hydrogen production system according to any one of Claims 5 to 7, further comprising:
a steam temperature acquisition device or a module internal temperature acquisition device that acquires a temperature of the SOEC.

9. A method for operating the hydrogen production system according to any one of Claims 2 to 4, the method comprising:

a step of acquiring the hydrogen concentration by using the hydrogen concentration acquisition device; and
a step of regulating the flow rate of the steam circulating through the first bypass line by using the first regulation device based on the hydrogen concentration acquired by the hydrogen concentration acquisition device.

10. A method for operating the hydrogen production system according to Claim 8, the method comprising:

a step of acquiring the temperature by using the steam temperature acquisition device or the module internal temperature acquisition device; and
a step of regulating the temperature of the steam circulating through the first bypass line by using the second regulation device based on the temperature acquired by the steam temperature acquisition device or the module internal temperature acquisition device.

11. The method for operating the hydrogen production system according to Claim 10, the method further comprising:
a step of decreasing a current value supplied to the SOEC after the step of regulating the temperature of the steam circulating through the first bypass line.

12. The method for operating the hydrogen production system according to Claim 9, the method further comprising:

a step of determining a reference range of the hydrogen concentration; and
a step of determining a reference range of a system steam utilization rate, which is a ratio of a flow rate of the steam electrolyzed in the SOEC to a flow rate of the steam supplied to the hydrogen production system,
wherein the first regulation device regulates the flow rate of the steam circulating through the first bypass line such that the system steam utilization rate and the hydrogen concentration acquired by the hydrogen concentration acquisition device are respectively within the reference ranges.

FIG. 1

FIG. 2

EP 4 653 578 A1

# FIG. 3

START

SET OPERATING CONDITION — S1

CALCULATE THEORETICAL HYDROGEN
GENERATION AMOUNT $Q_{H2}$ — S2

CALCULATE SYSTEM INPUT STEAM
AMOUNT $F_{H2O}$ — S3

CALCULATE FLOW RATE $F_{exit}$ OF GAS
FLOWING OUT FROM HYDROGEN
PRODUCTION SYSTEM — S4

CALCULATE CIRCULATION
FLOW RATE $F_C$ OF STEAM — S5

CALCULATE MODULE STEAM
UTILIZATION RATE $U_{sm}$ — S6

CALCULATE HYDROGEN
CONCENTRATION $P_{H2}$ — S7

END

## FIG. 4

EP 4 653 578 A1

FIG. 5

EXHAUST
GAS

AIR

HYDROGEN

FIG. 6

EP 4 653 578 A1

FIG. 7

EP 4 653 578 A1

## INTERNATIONAL SEARCH REPORT

| International application No. |
|---|
| **PCT/JP2024/001383** |

| | |
|---|---|
| **A. CLASSIFICATION OF SUBJECT MATTER** | |

*C25B 1/042*(2021.01)i; *C25B 9/00*(2021.01)i; *C25B 15/029*(2021.01)i; *C25B 15/08*(2006.01)i; *C25B 9/13*(2021.01)n
FI:   C25B1/042; C25B9/00 A; C25B15/029; C25B15/08 302; C25B9/13

According to International Patent Classification (IPC) or to both national classification and IPC

**B.   FIELDS SEARCHED**

Minimum documentation searched (classification system followed by classification symbols)

C25B1/042; C25B9/00; C25B15/029; C25B15/08; C25B9/13

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| A | JP 2004-60041 A (EBARA CORPORATION) 26 February 2004 (2004-02-26) | 1-12 |
| A | JP 2006-150188 A (NORITZ CORPORATION) 15 June 2006 (2006-06-15) | 1-12 |
| A | JP 62-211871 A (MITSUI ENGINEERING & SHIPBUILDING CO., LTD.) 17 September 1987 (1987-09-17) | 1-12 |
| A | WO 2012/121270 A1 (CHLORINE ENG. CORP LTD.) 13 September 2012 (2012-09-13) | 1-12 |
| A | JP 2019-537815 A (KABUSHIKI KAISHA TOSHIBA) 26 December 2019 (2019-12-26) | 1-12 |
| A | JP 2017-520685 A (SUNFIRE GESELLSCHAFT MIT BESCHRANKTER HAFTUNG) 27 July 2017 (2017-07-27) | 1-12 |
| A | JP 2009-1878 A (KABUSHIKI KAISHA TOSHIBA) 08 January 2009 (2009-01-08) | 1-12 |
| A | JP 2006-307290 A (HITACHI, LTD.) 09 November 2006 (2006-11-09) | 1-12 |

☐ Further documents are listed in the continuation of Box C.          ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **15 February 2024** | **05 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/001383**

| Patent document cited in search report | | | Publication date (day/month/year) | Patent family member(s) | | | Publication date (day/month/year) |
|---|---|---|---|---|---|---|---|
| JP | 2004-60041 | A | 26 February 2004 | US | 2004/0124095 | A1 | |
| JP | 2006-150188 | A | 15 June 2006 | (Family: none) | | | |
| JP | 62-211871 | A | 17 September 1987 | (Family: none) | | | |
| WO | 2012/121270 | A1 | 13 September 2012 | US | 2013/0334059 | A1 | |
| | | | | CN | 103518007 | A | |
| | | | | KR | 10-2013-0143646 | A | |
| JP | 2019-537815 | A | 26 December 2019 | WO | 2019/058579 | A1 | |
| JP | 2017-520685 | A | 27 July 2017 | US | 2017/0175277 | A1 | |
| | | | | WO | 2015/185039 | A1 | |
| | | | | DE | 102014108085 | A1 | |
| | | | | CA | 2951324 | A1 | |
| | | | | CN | 106460207 | A | |
| | | | | KR | 10-2017-0015976 | A | |
| JP | 2009-1878 | A | 08 January 2009 | (Family: none) | | | |
| JP | 2006-307290 | A | 09 November 2006 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023031470 A
- JP 6374965 B
- JP 6573984 B
- JP 2008115430 A